# EUROPEAN PATENT APPLICATION

(11) **EP 4 814 724 A1**
(43) Date of publication of application: **30.09.2026**
(21) Application number: 25300031.9
(22) Date of filing: 26.03.2025
(51) Int. Cl.: G06F 11/14

(54) **CONFIGURING INTEGRATED-CIRCUIT SYSTEMS**

(71) Applicant: Arm Ltd, Cambridge, Cambridgeshire CB1 9NJ (GB)
(72) Inventor: Marri, Sai Kumar, Austin, TX 78735 (US); Kaseridis, Dimitrios, Austin, TX 78735 (US); Ramji, Ajay, Austin, TX 78735 (US)
(74) Representative: Dehns

(57) **Abstract**

A method of configuring an integrated-circuit system is disclosed, wherein the integrated-circuit system comprises a plurality of nodes of a network, the plurality of nodes comprising one or more processing nodes and a plurality of caching nodes. First-assignment data (301) is accessed that assigns each of the plurality of nodes to a respective local cache region of a plurality of local cache regions. Defect data is accessed that identifies one or more of the nodes as being defective. For a first node of the plurality of nodes that is identified as being defective by the defect data: a first local cache region is identified, to which the first node is assigned by the first assignment data; a distance metric is used to identify (304) a second node, not identified as being defective by the defect data, that is a closest node, out of a subset of the plurality of nodes, for the first local cache region, under the distance metric; and second assignment data is generated (305) in which the second node is assigned to the first local cache region.

## Description

### TECHNICAL FIELD

The present disclosure relates to methods and software for configuring integrated-circuit (IC) systems containing defects.

### BACKGROUND

An integrated-circuit system, such as a single system-on-chip (SoC) or a plurality of coupled chips or chiplets, can include multiple components coupled by an interconnect as nodes of a network. Such components can include processing devices, storage devices and input-output devices. Requestor nodes (RNs) such as central processing units (CPUs), CPU clusters, graphics processing units (GPUs), GPU clusters, etc. may request data, over the network, from storage nodes (SNs) such as memory controllers coupled to memory of the system. Home nodes (HNs) of the system may act points of coherency for respective cache lines corresponding to respective sets of memory addresses.

During manufacturing of such IC systems, it can be expected that a proportion of the chips or chiplets will contain one or more defective nodes (e.g. CPUs). These defective nodes may be identified as defective during testing (e.g. during wafer, package or system-level testing). If the system has been designed with one or more "spare" nodes (i.e. with more nodes than are required to satisfy a product specification) then a spare node of the same type may be activated in place of a defective node. However, doing so can negatively impact the performance of the network.

### SUMMARY

Disclosed herein is a method of configuring an integrated-circuit system, wherein the integrated-circuit system comprises a plurality of nodes of a network, the plurality of nodes comprising one or more processing nodes and a plurality of caching nodes, the method comprising:
accessing first assignment data that assigns each of the plurality of nodes to a respective local cache region of a plurality of local cache regions;
accessing defect data that identifies one or more of the nodes as being defective; and
for a first node of the plurality of nodes that is identified as being defective by the defect data:
   - identifying a first local cache region to which the first node is assigned by the first assignment data;
   - using a distance metric to identify a second node, not identified as being defective by the defect data, that is a closest node, out of a subset of the plurality of nodes, for the first local cache region, under the distance metric; and
   - generating second assignment data in which the second node is assigned to the first local cache region

Also disclosed herein is an integrated-circuit system comprising a plurality of nodes of a network, the plurality of nodes comprising one or more processing nodes and a plurality of caching nodes, wherein the integrated-circuit system is configured to:
access first assignment data that assigns each of the plurality of nodes to a respective local cache region of a plurality of local cache regions;
access defect data that identifies one or more of the nodes as being defective; and
for a first node of the plurality of nodes that is identified as being defective by the defect data:
   - identify a first local cache region to which the first node is assigned by the first assignment data;
   - use a distance metric to identify a second node, not identified as being defective by the defect data, that is a closest node, out of a subset of the plurality of nodes, for the first local cache region, under the distance metric; and
   - generate second assignment data in which the second node is assigned to the first local cache region.

### BRIEF DESCRIPTION OF THE DRAWINGS

Certain embodiments of the invention will now be described, by way of example only, with reference to the accompanying drawings, in which:
Fig. 1 is a schematic diagram of part of an integrated-circuit system embodying the present disclosure;
Fig. 2 is a schematic diagram of a network of a chip embodying the present disclosure;
Fig. 3 is a flow chart of an iterative method embodying the present disclosure;
Fig. 4 is a schematic diagram illustrating four stages of a method embodying the present disclosure; and
Fig. 5 is a flow chart of a linear or iterative method embodying the present disclosure.

### DETAILED DESCRIPTION

Some embodiments provide a method of configuring an integrated-circuit system, wherein the integrated-circuit system comprises a plurality of nodes of a network, the plurality of nodes comprising one or more processing nodes and a plurality of caching nodes, the method comprising:
accessing first assignment data that assigns each of the plurality of nodes to a respective local cache region of a plurality of local cache regions;
accessing defect data that identifies one or more of the nodes as being defective; and
for a first node of the plurality of nodes that is identified as being defective by the defect data:
   - identifying a first local cache region to which the first node is assigned by the first assignment data;
   - using a distance metric to identify a second node, not identified as being defective by the defect data, that is a closest node, out of a subset of the plurality of nodes, for the first local cache region, under the distance metric; and
   - generating second assignment data in which the second node is assigned to the first local cache region.

Identifying the second node may comprise using the distance metric to rank the subset of the plurality of nodes, and selecting, as the second node, a highest ranked node of the subset. If there are multiple highest ranked nodes, a further metric such as a power characteristic may be used to select between them. In particular, some embodiments may comprise identifying a plurality of closest nodes for the first local cache region, under the distance metric, and selecting, as the second node, a node of the plurality of closest nodes at least partly in dependence upon a power characteristic of each node, which may be transistor voltage or a measure of leakage of each node.

In some examples, the second node could already be assigned to the first local cache region by the first assignment data, in which case the second assignment data may be the same as the first assignment data or may differ in that it indicates the second node as being an active node within the first local cache region. In such cases, the distance metric may be evaluated explicitly, or it may be used implicitly, e.g. by determining that the second node is in the first local cache region and, in response, assigning the second node a distance value (e.g. of zero) that is lower than that of any node outside the first local cache region.

However, in other examples, the second node is not assigned to the first local cache region by the first assignment data, and so a reassignment occurs. The first assignment data may assign the second node to a second local cache region different from the first local cache region, and the second assignment data may assign the second node to the first local cache region.

The subset of the plurality of nodes may comprise all of the nodes of the first local cache region that are not identified as being defective by the defect data. In this way, any spare node that is already within the first local cache region may be used to replace a defective node in the first local cache region, e.g. in preference to a spare node outside the first local cache region. This can help avoid introducing additional latencies.

The subset of the plurality of nodes may comprise all of the nodes that are assigned by the first assignment data to any of a set of one or more of the local cache regions. Each local cache region may be associated with a respective set of one or more local cache regions (also referred to herein as recovery regions), which may contain fewer than all of the local cache regions to which nodes are assigned by the first assignment data. In some embodiments, the subset of the plurality of nodes, or each subset of the plurality of nodes, is a strict subset of the plurality of nodes (however, this is not essential, and a subset could, in some embodiments, be the whole set).

The local cache regions may respective contiguous regions. The second local cache region may be adjacent to the first local cache region. Each node of the plurality of nodes may be coupled to a respective router of a plurality of routers, which may be logically and/or physically coupled as a polygonal (e.g. rectangular) mesh of routers. Each of the plurality of local cache regions may comprise a respective set of nodes located within a respective polygonal region of the polygonal mesh. Each polygonal region may comprise a respective set of vertex routers.

The distance metric, when applied to a node, for a local cache region, may determine a value in dependence upon a logical or physical separation between each respective vertex router of the local cache region and the router to which the node is coupled. In some embodiments, the distance metric, when applied to a node and a local cache region, is the sum, over all of the vertex routers of the local cache region, of how many routers separate each respective vertex router from the router to which the node is coupled.

The method may further comprise:
identifying a third node of the plurality of nodes, not identified as being defective by the defect data, that is assigned, by the first assignment data, to a third local cache region different from the first and second local cache regions, wherein identifying the third node comprises using the distance metric to identify, as the third node, a closest node, out of a subset of the plurality of nodes, for the second local cache region, under the distance metric; and
generating further assignment data that assigns the third node to the second local cache region.

The method may be performed iteratively for a plurality of defective nodes. It may comprise, for each of a plurality of first nodes identified as being defective by the defect data:
identifying a respective first local cache region to which the respective first node is assigned by the first assignment data;
using the distance metric to identify a respective second node, not identified as being defective by the defect data, that is a closest node, out of a respective subset of the plurality of nodes, for the respective first local cache region, under the distance metric; and
generating further assignment data in which each respective second node is assigned to the respective first local cache region.

The method may comprise accessing requirement data that indicates, for each of the plurality of local cache regions, a respective required (i.e. minimum) number of non-defective and/or active processing nodes or of non-defective and/or active caching nodes to be in each local cache region (i.e. after all reassignment of nodes between cache regions has been completed). It may comprise determining which nodes, identified as defective by the defect data, to include in the plurality of first nodes at least partly in dependence upon the requirement data, such that the second assignment data assigns at least the respective required number of non-defective (i.e. not identified as being defective by the defect data) processing or caching nodes to each of the plurality of local cache regions.

The method may comprise accessing or generating spare-node data that indicates, for each of the plurality of local cache regions, a respective number of processing nodes or of caching nodes that are surplus to a required number of active processing nodes or of active caching nodes for the local cache region. The spare-node data may be generated using the requirement data and/or assignment data. It may be updated at each iteration, e.g. after generating each iteration of further assignment data. The method may comprise determining, for each of the plurality of first nodes identified as being defective, which nodes to include in the respective subset of the plurality of nodes at least partly in dependence upon the spare-node data.

The method may comprise accessing or generating spare-node data that indicates, for each of the first local cache regions, a respective set of one or more local cache regions from which to identify the respective closest node (i.e. recovery cache regions), and the method may further comprise, for each of the plurality of first nodes identified as being defective, including in the respective subset only nodes contained in the respective set of one or more local cache regions indicated for the respective first local cache region.

In some embodiments, a step of designating some of the plurality of first nodes as active nodes (i.e. available for performing data-processing operations) may be performed after the generating of the second or further assignment data. This may comprise generating final assignment data (e.g. from the second or further assignment data), in which the active nodes are indicated. All or a subset of the non-defective nodes may be assigned as active nodes. In some embodiments, the second and/or further and/or final assignment data may indicate, for each of the plurality of nodes, whether the respective node is an active node within the respective local cache region to which the node is assigned.

In some embodiments, the integrated-circuit system comprises one or more bridges or interfaces, and stores first affinitization data that associates each of the bridges or interfaces with a respective caching node of the plurality of caching nodes. The method may further comprise:
generating further assignment data that assigns, to a first local cache region, a first caching node, assigned to a second local cache region by the first assignment data, wherein the first affinitization data associates the first caching node with a first bridge or interface (e.g. a memory controller); and
generating second affinitization data that affinitizes the first bridge or interface with a second caching node, of the plurality of caching nodes, different from the first caching node.

The first assignment data may be stored in a storage of the integrated-circuit system. The method may further comprise writing the second assignment data to the storage.

In some embodiments, the method is performed by a system that is external to the integrated-circuit system (i.e. off-chip). The system may comprise chip-testing equipment. In other embodiments, the method is performed by software (e.g. firmware) executing on a processing system of the integrated-circuit system. The software may execute the method at a boot time of the system or during a runtime of the system.

Thus the disclosure provides software comprising instructions that, when executed by a processing system, cause the processing system to perform a method as disclosed herein. The software may be provided by a non-transitory computer-readable medium, such as a volatile or non-volatile solid-state memory.

Some embodiments provide an integrated-circuit system configured to perform a method as disclosed herein. The system may comprise a plurality of nodes of a network, the plurality of nodes comprising one or more processing nodes and a plurality of caching nodes. The integrated-circuit system may be a single chip or may comprise a plurality of coupled chips or chiplets. The system may be a multi-chip system with a multi-level hierarchical cache. A cache line of a local cache region may be in the same chip as the local cache region or may be in a different chip of a multi-chip system forming a hierarchal cache system (e.g. providing processor caching and/or system-level caching as well as local caching by the local cache regions).

The system may be configured to:
access first assignment data that assigns each of the plurality of nodes to a respective local cache region of a plurality of local cache regions;
access defect data that identifies one or more of the nodes as being defective; and
for a first node of the plurality of nodes that is identified as being defective by the defect data:
   - identify a first local cache region to which the first node is assigned by the first assignment data;
   - use a distance metric to identify a second node, not identified as being defective by the defect data, that is a closest node, out of a subset of the plurality of nodes, for the first local cache region, under the distance metric; and
   - generate second assignment data in which the second node is assigned to the first local cache region.

Any data generated by a step disclosed herein may be stored (e.g. in an on-chip memory or register) and/or output over an interface and/or further processed. Accessing data may comprise reading the data from a storage system (e.g. from an off-chip memory, or from an on-chip register or memory). The method may further comprise generating any of the data that is accessed by a step disclosed herein, before the data is accessed.

A non-transitory computer-readable medium may store computer-readable code for fabrication of an integrated-circuit system or portion thereof as disclosed herein.

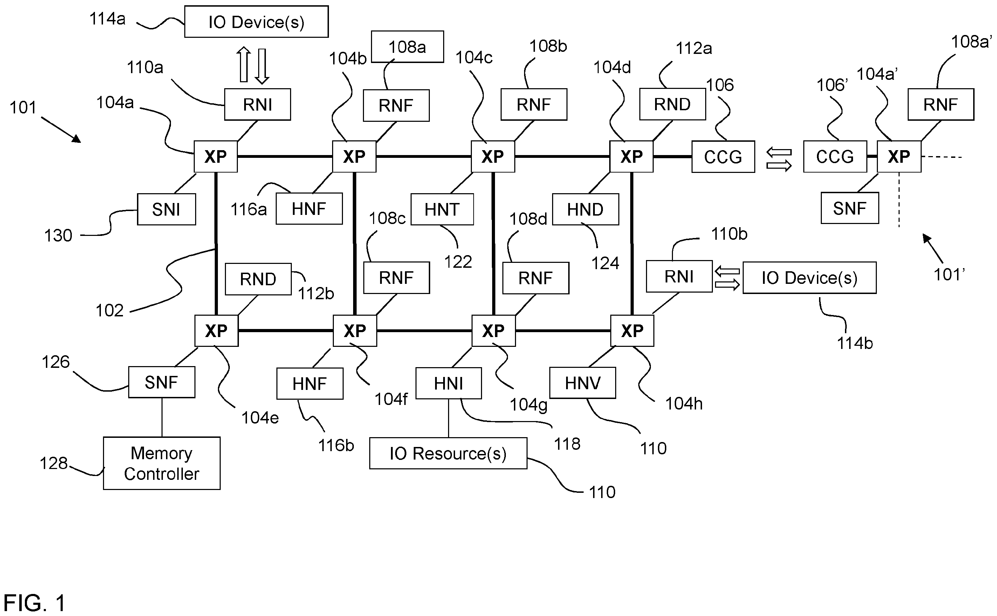

Fig. 1 shows part of an exemplary integrated-circuit system 101 (e.g. a system-on-chip). The system 101 includes an interconnect 102 comprising a rectangular array of set of routers 104, here labelled as cross-points (XP), coupled by physical channel links. The links provide horizontal (X-axis) and vertical (Y-axis) connections between adjacent XPs 104. The rectangular layout is a logical layout and is not necessarily reflected in the physical placement of the routers and other components on the integrated circuit, although it may be in some embodiments.

The integrated-circuit system 101 includes a plurality of nodes. The nodes are coupled together by the interconnect 102, thus forming a connection between the functional blocks which the nodes provide. The interconnect 102 provides signal connections between the nodes and may have various topologies. The interconnect 102 in Fig. 1 has a rectangular mesh topology, but in other variants it may be configured to form a mesh network, a ring network, a cross-bar network, or other network. The interconnect provides a number of cross-points (XPs) 104a-104h. Each cross-point 104a-104h provides one more device ports for coupling to nodes (e.g. to request nodes and home nodes as described below) and one or more network ports which couple to other respective cross-points.

Each router 104 is a multi-channel router. In some examples, flits transmitted through the interconnect 4 are able to be sent on four or more channels provided by the interconnect 102 - e.g. a Request Channel (REQ), a Response Channel (RESP), a Data Channel (DAT), and a Snoop Channel (SNP). Each of these (or only some, e.g. RESP and DAT) may be duplicated in order to provide separate channels for transmit (TX) and receive (RX). The REQ channel is used for sending read and write requests, cache maintenance requests, and Distributed Virtual Memory (DVM) requests. The RESP channel is used to send completion responses for various types of messages, ranging from write and cache management responses to data-less snoop responses and operation completion acknowledgments. The SNP channel issues snoops and sends DVM operations. The DAT channel is used to send write and read data, and snoop responses which include data.

Protocol messages are sent in the form of a flit. Flits are a packetized collection of control fields and identifiers that communicate a protocol message. Some of the control fields sent in a flit include opcodes, memory attributes, address, data, and error responses. Each channel may use different flit control fields. For example, a flit to read or write on the Request channel uses an Address field, and a flit on the Data channel uses the Data and Byte Enable fields. The fields in a flit may be sent in parallel (i.e. not serialized over multiple packets).

There are three categories of node which may be present in the integrated-circuit system 101 - these are Request Nodes (RNs), Home Nodes (HNs) and subordinate nodes (SNs). Each of these is described further below.

Chip-to-chip gateways (CCGs) can couple between a network on one chip or chiplet (i.e. one integrated-circuit system 101) and a similar network on another chip or chiplet (i.e. a second integrated-circuit system 101'). This enables formation of a network spanning multiple chips or chiplets. Two example chip-to-chip gateways 106, 106' belonging respectively to the first and second integrated-circuit systems 101, 101' are shown in Fig. 1, connecting an XP 104d of the first integrated-circuit system 101 to an XP 104a' of a second integrated-circuit system 101'. Only a small part of the second integrated-circuit system 101' is shown. Set of CCGs may be grouped together in cross-chip-gateway port aggregation groups (CPAGs).

In this example, CCG nodes 106, 106' include both a request agent (RA), for issuing requests and receiving snoops, and a home agent (HA), for receiving requests and issuing snoops.

A role of request nodes (RNs) within the network is to generate transactions, such as read and write requests, in order to access and process data. These transactions are sent to Home Nodes (HNs).

There are several different varieties of request node, each of which is described by a corresponding term - a Fully Coherent Request Node (RNF), an input/output (I/O) Coherent Request Node (RNI), and an I/O Coherent RN with Distributed Virtual Memory (DVM) support (RND). A request node may be, for example, a central processing unit (CPU) core, a neural engine or other accelerator, or a Component Aggregation Layer that houses two or more CPU cores to be connected to one network port.

A Fully Coherent Request Node (RNF) contains coherent caches and will accept and respond to snoop messages for accessing or changing the coherency state of cached data. It will be understood that coherency refers to ensuring that all processors in the system see the same view of memory, meaning that changes to data held in the cache of one core are visible to the other cores, making it impossible for cores to see stale copies of data (the old data from before it was changed by the first core).

An I/O-Coherent Request Node (RNI) does not have a coherent cache, and cannot accept snoop messages. An I/O-Coherent Request Node with DVM support (RND) has the same functionality as an RNI and can also accept DVM messages. Example RNFs 108a-108d, 108a', RNIs 110a, 110b, and RNDs 112a, 112b, are illustrated in the integrated-circuit system 101 of Fig. 1. As illustrated, the RNIs are connected to one or more IO devices 114a, 114b. Although not illustrated, it will be understood that the RNDs 112a, 112b, may also be connected to one or more IO devices.

Home Nodes (HNs) receive transactions from Request Nodes (RNs), and are responsible for ordering these requests, generating transactions to SNs (discussed below) and in some cases issuing snoops and handling DVM operations. There are two main types of home node - fully coherent Home Nodes (HNFs), which order all requests to coherent memory and issue snoops to RN-Fs, and non-coherent Home Nodes (HNIs) which order requests that target an I/O subsystem. Both types act as a point of serialization.

The integrated-circuit system 101 includes a system level cache (SLC) which may reduce the number of accesses to memory and reduce the latency of data accesses. The system level cache may be distributed across a large set of home nodes in a network to share the cache capacity over all network nodes across multiple chips, in particular across the fully coherent home nodes (HNFs). The portion of a system level cache (SLC) present at a particular HNF may be referred to as a system cache group (SCG). A fully coherent home node (HNF) provides a point of coherency for a respective subset of system addresses and provides a cache for storing data associated with the addresses. Coherency may be provided by a snoop filter (SF) that tracks data copied to caches in the network caches. HNFs may thus comprise a system cache group (part of the system level cache) and a snoop filter. Thus, HNFs control coherency among data stored by the system. Two example HNFs 116a, 116b are shown in Fig. 1, along with an example HNI 118, which is connected to one or more I/O resources 110.

There are further types of home node which are variations of the HNIs having additional functionality compared to an HNI - these include HNVs, HNTs, and HNDs. An HNV is an HNI which further includes a distributed virtual memory (DVM) node. An HNT is an HNI further including the functionality of both a DVM node and also a Debug Trace Controller (DTC). An HND is HNI further including the functionality of a DVM node, a DTC, and a configuration subordinate (which is a subordinate interface for configuration register space access). Fig. 1 shows an example HNV 110, HNT 122 and HND 124.

A distributed virtual memory (DVM) node, also referred to as a DN, controls its own respective DVM domain, such that each RNF sends its DVM requests to the DN in its own domain. DVM requests are messages that request a DVM operation in order to support maintenance of the virtual memory system. The DN propagates snoops and receives corresponding responses, based on the received DVM request.

Subordinate nodes (SNs) provide access to data sources and sinks, such as memory and peripheral devices. A memory or peripheral device may be located off-chip or on-chip (i.e. as part of the integrated-circuit system 101, or separate from it).

There are two types of subordinate node: fully coherent subordinate nodes (SNFs) which connect to memory devices that back the coherent memory space, and non-coherent subordinate nodes (SNIs) which connect to I/O peripherals or non-coherent memory. Fig. 1 shows an example SNF 126, connected to a memory controller 128, and an example SNI 130, which may be connected to non-coherent memory or an I/O peripheral.

Every component in the system is assigned a unique node identifier (ID). The system uses a System Address Map (SAM) to convert physical addresses to node IDs. The SAM can be stored locally across RNs and HNs, which use it to determine a target ID for sending requests and snoops to a targeted node. These identifiers can be used by the XPs 104 for routing flits through the network. In some embodiments, the node identifiers are stored in tables corresponding to the category of node (HNF, etc.) and a hash algorithm (e.g. power-of-two or modulo hashing) is applied to a memory address in order to determine an integer offset for a lookup into the table to find the node ID corresponding to that memory address.

In addition to RN-level caching and system-level caching, embodiments of the present disclosure also provide local-level caching. This is implemented by allocating RNs and HNs to any of a number of local cache regions (i.e. local coherency domains - LCDs). Each local cache region provides a local coherency cache, spanning the system address space, for use by RNs allocated to that cache region. The cache region functionality is distributed across a set of local coherency nodes (LCNs) within the cache region, each of which provides a point of coherency for a respective set of cache lines (i.e. for a respective set of memory addresses). An RN that has a cache miss on its internal cache can request a local-coherency-cache lookup within its local cache region, rather than having to move straight to performing a system-level-cache lookup from an HN that may be remote from the RN (e.g. being physically far away on the same chip or on a different chip or chiplet). This provision of local cache regions can thus reduce latency.

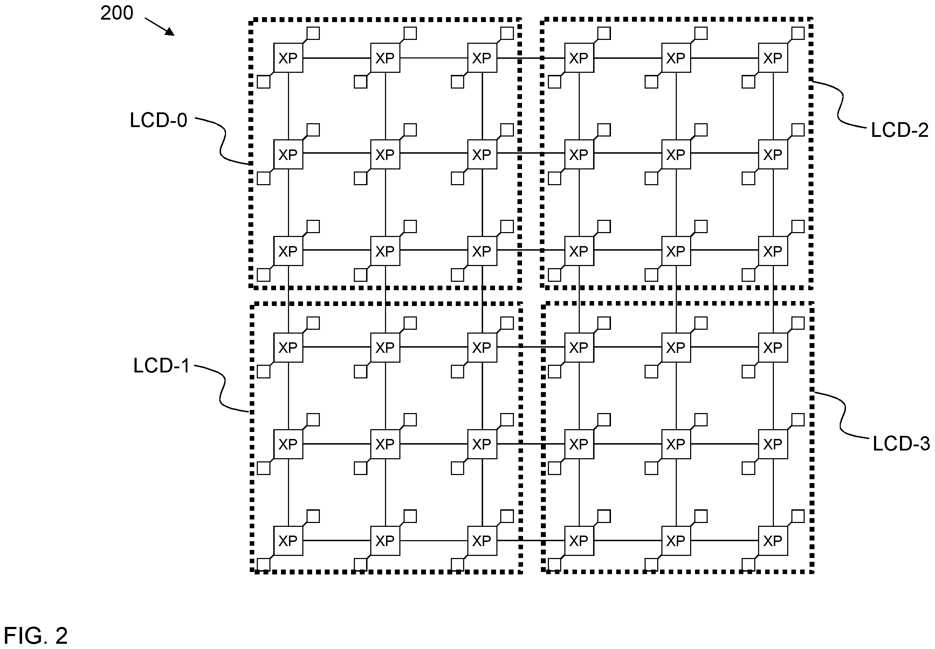

Fig. 2 shows part of an exemplary chip 20 that contains four local cache regions (here labelled as LCD-0 to LCD-3, indicating respective local coherency domains), each containing nine XPs and eighteen nodes. Each local cache region may include a mixture of RNs, HNs and SNs. The number of local cache regions and the assignment of nodes to local cache regions may be configurable, e.g. being fused at production time, or being configured by software at boot time. The assignment of RNs and HNs to respective local cache regions may be stored in assignment data, e.g. stored in registers or configuration memory of the system 101. The assignment data may be stored centrally or may be distributed across the system 101, potentially with multiple mirrored copies. The assignment data may, in some embodiments, also indicate which nodes are active nodes within each local cache region. Other nodes may be assigned to local cache region but may be inactive-e.g. being spare nodes or being defective nodes. In some examples, an equal number of nodes may be assigned to each local cache region, but this is not essential.

At least in some configurations, each local cache region may correspond to a respective contiguous area of the interconnect, such that devices within the same local cache region are likely to be relatively close together physically and/or in communication latency. In particular, each local cache region may be confined to one respective chip or chiplet-i.e. not spanning multiple chips or chiplets.

In some embodiments - especially, although not exclusively, in multi-chip systems - the HNFs are implemented as super home nodes (HNSs). These have dual functionality, acting as an HNF for local coherent memory and as a local coherency node (LCN) for remote coherent memory. An HNS allows caching of remote addresses which allows local sharing without going off-chip. The node ID of an HNS can be obtained in either of two ways: as the result of an HNF lookup, or as the result of an LCN lookup. When an RN issues a request to an HNS, it can indicate in the request whether the request should be processed for local-coherency-cache lookup (i.e. by the LCN component of the HNS node) or for system-level-cache lookup (i.e. by the HN component within the HNS node). In other embodiments, the LCNs are distinct nodes-i.e. having their own connections to respective XPs 104.

Every request is first directed to the LCN for local-coherency-cache lookup. If the cache-line misses at local-coherency-cache, it is then directed, by the LCN, to the appropriate HN for system-level-cache lookup. The system address map (SAM) at a requestor node (RN) distributes requests across local coherency nodes (LCNs) based on the local cache region (i.e. local coherency domain - LCD) definition and further distributes requests across home nodes (HNs) based on the system-level definition. A snoop filter at the system level cache (SLC) tracks the multiple local cache regions in the system and a snoop filter at each local coherency cache tracks the individual requestors (RNs) within this hierarchy. For a given snoop address and node identifier, the SAM determines the corresponding local cache region and further determines the local coherency node (LCN) based on how cache-lines are distributed in the local cache region.

During manufacturing of the IC system 101 and/or 101', or a different IC system comprising a network of nodes, it is expected that a proportion of chips or chiplets of the system will have one or more defects. Rather than discarding these chips or chiplets, they may be designed to include one or more spare nodes (e.g. RNs and/or HNs) that are surplus to a minimum specified or required number of non-defective and/or active nodes of the respective type. A spare node may remain inactive if no defects are present, but may be activated if another node of the same type is identified as being defective. In this way the chip or chiplet need not be discarded.

Mesh networks have grown in size and complexity to support modern computational requirements. Large silicon designs come with higher probabilities of manufacturing defects which drive a desire for ways to reconfigure silicon around different defect patterns to get high power and/or performance at low cost (by improving the usable dies per wafer).

However, the applicant has realized that substituting a defective node with a spare node may, if done inappropriately, introduce undesirable latency problems. In particular, if a spare node is assigned to a local cache region whose other nodes are physically distant from the spare node, then local cache lookups involving the spare node may be significantly delayed. The system may be particularly sensitive to latencies between the RNFs and HNSs in the local cache regions, and the latencies between HNFs and SNFs for requests that miss the caches.

Thus, disclosed herein is an approach to assigning recovery nodes (i.e. spare nodes) within a configurable hierarchical cache system that may result in reduced screening of silicon parts during manufacturing while still getting good performance from the system post-recovery.

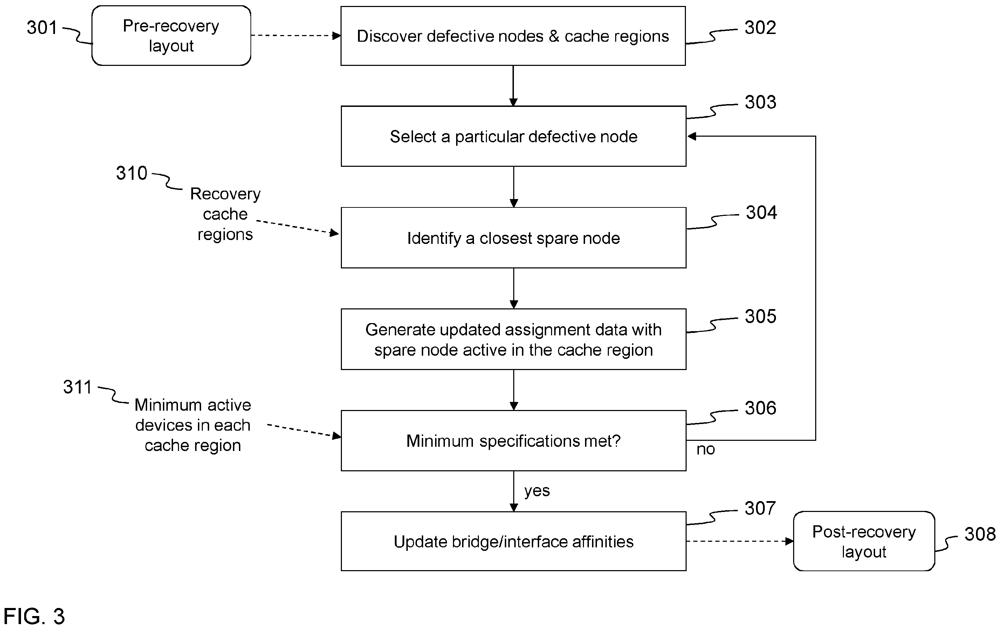

Fig. 3 provides an overview of a method that starts with an initial assignment 301 of nodes to local cache regions, and then uses defect data to generate an updated assignment 308 that is optimized to reduce the impact of the reassignment on network latencies.

The method may be performed by off-chip test equipment, with the updated assignment data being written to the chip after the method completes. Alternatively, the method may be performed on-chip; it may be implemented by software (e.g. firmware) executing on the system itself (e.g. being executed by one or more of the RNs). The method may be performed at boot time. It may be run once only, or it may be executed at intervals, e.g. whenever it is desired to change the assignment of nodes to local cache regions.

A pre-recovery layout 301 may be represented by initial assignment data that assigns each of a plurality of nodes (e.g. RNFs and HNFs) to a respective local cache region. The pre-recovery layout 301 data may also specify information such as the mesh dimensions and/or coordinates.

Also received as inputs to the method are a specification 310 of recovery cache regions and a specification 311 of a minimum number of active, non-defective devices of each of one or more types that are required in each cache region. These specifications 310, 311 may be fixed or they may have been previously generated, either on-chip or off-chip. The specification 310 of recovery cache regions indicates, for each of the local cache regions in the pre-recovery layout 301, one or more of the other local cache regions that are designated as recovery cache regions for that local cache region-i.e. from which a spare node may be taken to be reassigned to the local cache region in case of a defect in an RNF or HNF of the local cache region. In other embodiments, however, there may not be any restriction on recovery cache regions, and every local cache region may be available to provide spare nodes to every other local cache region.

In a first step 302 of the method, a discovery process is performed that enumerates all the relevant devices (e.g. HNFs and RNFs) in the network and determines whether they are functional or defective. From this information, and the pre-recovery layout 301, a list of local cache regions that need recovery (i.e. that contain one or more defective nodes) is generated.

Next, an iterative process is performed, which iterates over the defective nodes. First an initial (or next) defective node is selected 303. Then a closest spare node to the defective node is identified 304, where the closest spare node lies either within the same local cache region as the defective node, or in one of designated recovery regions for the local cache region; this is described in more detail below. Then updated assignment data is generated 305 that assigns the spare node to the local cache region (unless it is already in the same local cache region). Then the updated assignment is tested 306 against the minimum requirements 311 to see if every local cache region has a requisite number of nodes of each type. If not, the process iterates back round by selecting 303 a next defective node. If so, then at least the minimum number of nodes of each type in each cache region can be marked as active (e.g. in the final assignment data) and available for use, and then the affinities between home nodes (e.g. HNFs) and bridges or interfaces (e.g. SNFs) are updated 307; this is described in more detail below. Finally, the post-recovery layout 308 is output. This may comprise the updated assignment data that is generated through the iterative process-e.g. after the final iteration has completed.

The step of identifying a closest spare node 304 may be performed in various ways and may use any of a variety of distance metrics. However, in some embodiments, it performs a search based on a Manhattan distance (taxicab distance) metric, in which this metric is applied to each of the vertices of the local cache region containing the selected defective node. The Manhattan distance counts the number of nodes along the X-direction and the Y-direction from source node to destination node, which is representative of the distance travelled by a message along the rectangular mesh network.

After device discovery 302, the search algorithm has a view of the entire mesh network, and of the local cache regions along with their respective vertices (corners), and the available spare devices in each local cache region. A spare device (also referred to herein as a recovery device) here refers to a surplus device (i.e. a node that is currently assigned to a local cache region that contains more than a minimum required number of active nodes) that is available in a region and that can be potentially mapped to a defect in order to meet the minimum required devices per cache region specification 311. The Manhattan-based approach searches over all spare nodes that are in one of its designated recovery regions (or anywhere on the chip if recovery regions are not specified). These "spare" nodes may include every non-defective node in every recovery region that currently is assigned nodes (of the requisite type) in excess of its minimum requirement. For each spare node, the method calculates the sum of the Manhattan distances from the spare node to each of the vertices of the local cache region. Each vertex may correspond to a respective router (e.g. XP) and to a node or nodes that are coupled to this router. In the case of a contiguous, rectangular local cache region, four distances will be calculated. The sums are then compared to identify a lowest sum, and a spare node having the lowest sum is identified 304. If multiple spare nodes have a joint lowest sum, then a power characteristic of each of these nodes (e.g. transistor voltage, Vₘᵢₙ, or a measure of leakage) may be compared and used to identify an optimal one of the spare nodes to be the replacement node. The method may access these power characteristics from data stored on or off the chip. The search may include spare nodes that are in the same region as the defective node; however, in some embodiments, for improved efficiency, when a region with a defective node already contains a spare node, this spare node may be allocated to replace the defective node without also considering nodes outside the region-i.e. without explicitly evaluating the distance metric for any nodes.

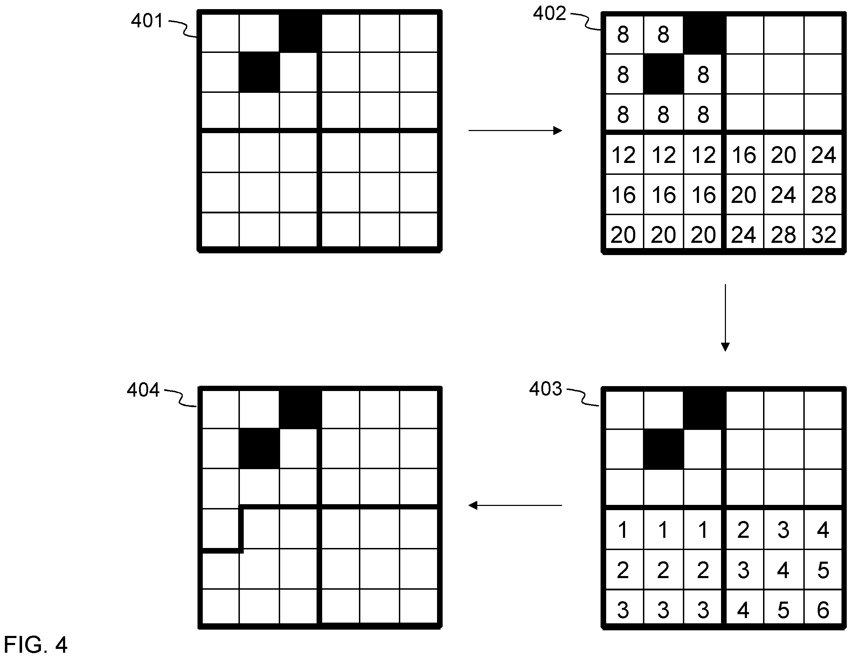

Fig. 4 shows an example of the method being applied to a square mesh network 401 of 6x6 nodes. Each node is here represented as a small square, which may correspond to a combination of a router and a device (e.g. an RNF). In this example, initial assignment data has assigned the nodes into four 3x3 square local caching regions and, during the discovery phase, two nodes of the top-left region have been identified as defective-indicated by the black squares. In this simplified example, all the nodes are assumed to be of the same type (e.g. all RNFs). In this example, the bottom-left and bottom-right regions have been designated as recovery regions for the top-left region, and the specifications require that the top-left region has eight active, non-defective nodes (i.e. once the final assignment is completed).

Assume the search method is seeking a replacement for the central defective node in the top-left region. The next diagram 402 shows, for each of the nodes in the top-left, bottom-left and bottom-right regions, the respective sum of Manhattan distances from the node to the four vertices of the top-left region. In this example, it is assumed that the top-left region requires eight active, non-defective nodes and so cannot itself offer any spare nodes, whereas the bottom-left and bottom-right regions each have at least one node that is surplus to their required minimum number of active nodes (i.e. they contain spare nodes). Although the nodes of the top-left region have the lowest distance score, they are unavailable (being needed to meet the minimum requirements, so not spare) and so the closest spare nodes are the three nodes in the top row of the bottom-left region, which are ranked joint first. The ranks of the other nodes of the bottom regions are shown in the third diagram 403 (however, these ranks need not necessarily be calculated in practice, since it is only required to identify the lowest sum of distances). In this example, the top-left-most node of the bottom-left region is selected due to having between performance characteristics than the other two top-ranked nodes. Updated assignment data is generated that assigns this spare node to the top-left region. If the bottom-left region also requires eight active nodes, then it will no longer contain any spare nodes for successive iterations; however, if its requirement is lower, then its remaining non-defective nodes may be considered as spare nodes for the next iteration.

In some embodiments, the search can be extended by "chaining" defects to adjacent regions before mapping to the final recovery node. This may, in some situations, allow the sum of Manhattan distances between the defective cache region and the reassigned recovery node to be further reduced. This "chaining" may be implemented by reassigning a node to a cache region from a recovery region even where that recovery region has no surplus nodes, but then in turn reassigning a node to that recovery region from one of its recovery regions, so that it can still meet the required minimum specifications.

The step 307 of updating affinities involves re-balancing the paths to SNFs from the HNFs for cases when RNF requests are missing all the cache hierarchies and require data to be fetched from the memory sitting behind the SNF. It may also be performed for affinities between HNFs and other interfaces (e.g. to peripherals) and/or bridges (e.g. chip-to-chip gateways). HNF-SNF affinities may be generated based on physical distance on the mesh. Since the defective HNFs have been replaced by spare/recovery HNFs, the average distances of the HNF-SNF pairs may be recalculated and used to create new sets of affinitized HNF-SNF groups.

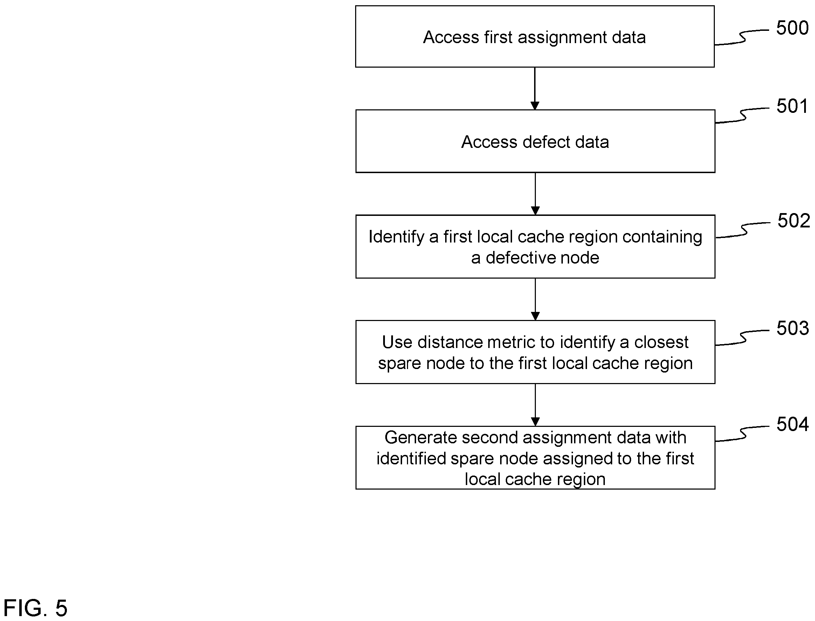

Fig. 5 provides a further overview of a method according to the disclosure. It is a general method in that it could in principle be performed just once, to reassign replace a single defective node, but may also encompass iterative processes such as the method illustrated in Fig. 3. A first step 500 accesses first assignment data that assigns each of the plurality of nodes to a respective local cache region of a plurality of local cache regions. A second step 501 accesses defect data that identifies one or more of the nodes as being defective. A third step 502 identifies, for a first node of the plurality of nodes that is identified as being defective by the defect data, a first local cache region is identified, to which the first node is assigned by the first assignment data. A fourth step 503 uses a distance metric to identify a second node, not identified as being defective by the defect data, that is a closest node, out of a subset of the plurality of nodes (e.g. out of a designated set of recovery regions), for the first local cache region, under the distance metric. A fifth step 504 generates second assignment data in which the second node is assigned to the first local cache region.

In this way, a mechanism is provided that can handle various defect patterns to keep the average and worst-case performance variation across different defect patterns within acceptable bounds without the need for aggressive screening of parts during manufacturing. The methods may, in some embodiments, be implemented in firmware on the system. From simulations, it has been determined that, for some systems, this approach can give >20% better performance in high bandwidth workloads compared to linear search techniques.

At least some embodiments thus address the problem that large silicon designs with scalable mesh networks suffer from increased manufacturing defects, leading to yield losses and performance variations, and traditional defect recovery methods are linear and do not consider cache affinity, workload access patterns, or latency optimizations, leading to over 20% performance loss in high-bandwidth workloads. In particular, when supporting multi-level cache hierarchies, manufacturing cost vs. performance trade-offs become more complex, especially if supporting large-scale data-sharing workloads.

Some embodiments provide an optimized defect recovery framework that satisfies one or more, or all, of the following properties:
utilizes a multi-level cache-aware search algorithm to map defective mesh components to recovery nodes efficiently;
implements a "Vertex Manhattan Search Engine" to select optimal recovery nodes based on one or more or all of:
   - minimal mesh communication latency (Manhattan distance calculation);
   - cache region awareness (local affinity for cache-line mappings);
   - spare node availability and ranking (redundant components distributed across the system); and/or
dynamically rebalances cache-to-memory paths to mitigate performance degradation due to defect remapping.

Various embodiments described herein are implemented using dedicated hardware, configurable hardware or programmed processors executing programming instructions that are broadly described in flow chart form that can be stored on any suitable electronic storage medium or transmitted over any suitable electronic communication medium. A combination of these elements may be used. Those skilled in the art will appreciate that the processes and mechanisms described above can be implemented in any number of variations without departing from the present disclosure. For example, the order of certain operations carried out can often be varied, additional operations can be added, or operations can be deleted, without departing from the present disclosure. Such variations are contemplated and considered equivalent.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the system embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define an HDL representation of the one or more logic circuits embodying the system in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioural representations of the concepts that can be interpreted by a computer to enable simulation, functional and/or formal verification, and testing of the concepts.

Additionally or alternatively, the computer-readable code may define a low-level description of integrated-circuit components that embody concepts described herein, such as one or more netlists or integrated-circuit layout definitions, including representations such as GDSII. The one or more netlists or other computer-readable representation of integrated-circuit components may be generated by applying one or more logic synthesis processes to an RTL representation to generate definitions for use in fabrication of an apparatus embodying the invention. Alternatively or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated-circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively or additionally, the concept may be defined in a combination of a computer-readable definition to be used in a semiconductor design and fabrication process to fabricate an apparatus and computer-readable code defining instructions which are to be executed by the defined system once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

The following numbered clauses set out further aspects and embodiments of the disclosure.

Clause 1. A method of configuring an integrated-circuit system, wherein the integrated-circuit system comprises a plurality of nodes of a network, the plurality of nodes comprising one or more processing nodes and a plurality of caching nodes, the method comprising:
accessing first assignment data that assigns each of the plurality of nodes to a respective local cache region of a plurality of local cache regions;
accessing defect data that identifies one or more of the nodes as being defective; and
for a first node of the plurality of nodes that is identified as being defective by the defect data:
   - identifying a first local cache region to which the first node is assigned by the first assignment data;
   - using a distance metric to identify a second node, not identified as being defective by the defect data, that is a closest node, out of a subset of the plurality of nodes, for the first local cache region, under the distance metric; and
   - generating second assignment data in which the second node is assigned to the first local cache region.

Clause 2. The method of clause 1, wherein the first assignment data assigns the second node to a second local cache region different from the first local cache region, and wherein the second assignment data assigns the second node to the first local cache region.

Clause 3. The method of clause 1, wherein identifying the second node comprises using the distance metric to rank the subset of the plurality of nodes, and selecting, as the second node, a highest ranked node of the subset.

Clause 4. The method of clause 1, wherein the subset of the plurality of nodes comprises all of the nodes that are assigned by the first assignment data to any of a set of one or more of the local cache regions and that are not identified as being defective by the defect data.

Clause 5. The method of clause 4, wherein the set of one or more of the local cache regions includes the first local cache region.

Clause 6. The method of clause 2, wherein the second local caching domain is adjacent the first local caching domain.

Clause 7. The method of clause 1, wherein:
each node of the plurality of nodes is coupled to a respective router of a plurality of routers;
the plurality of routers are logically coupled as a polygonal mesh of routers; and
each of the plurality of local cache regions comprises a respective set of nodes located within a respective polygonal region of the polygonal mesh, wherein each polygonal region comprises a respective set of vertex routers.

Clause 8. The method of clause 7, wherein the distance metric, when applied to a node, for a local cache region, determines a value in dependence upon a logical or physical separation between each respective vertex router of the local cache region and the router to which the node is coupled.

Clause 9. The method of clause 1, further comprising:
identifying a third node of the plurality of nodes, not identified as being defective by the defect data, that is assigned, by the first assignment data, to a third local cache region different from the first local cache region and different from a second local cache region to which the first assignment data assigns the second node, wherein identifying the third node comprises using the distance metric to identify, as the third node, a closest node, out of a subset of the plurality of nodes, for the second local cache region, under the distance metric; and
generating further assignment data that assigns the third node to the second local cache region.

Clause 10. The method of clause 1, comprising identifying a plurality of closest nodes for the first local cache region, under the distance metric, and selecting, as the second node, a node of the plurality of closest nodes at least partly in dependence upon a power characteristic of each node.

Clause 11. The method of clause 1, further comprising, for each of a plurality of first nodes identified as being defective by the defect data:
identifying a respective first local cache region to which the respective first node is assigned by the first assignment data;
using the distance metric to identify a respective second node, not identified as being defective by the defect data, that is a closest node, out of a respective subset of the plurality of nodes, for the respective first local cache region, under the distance metric; and
generating further assignment data in which each respective second node is assigned to the respective first local cache region.

Clause 12. The method of clause 1, comprising:
accessing requirement data that indicates, for each of the plurality of local cache regions, a respective required number of non-defective or active processing nodes or of non-defective or active caching nodes to be in each local cache region; and
determining which nodes, identified as defective by the defect data, to include in the plurality of first nodes at least partly in dependence upon the requirement data, such that the second assignment data assigns at least the respective required number of non-defective or active processing or caching nodes to each of the plurality of local cache regions.

Clause 13. The method of clause 1, further comprising a step of designating one or more of the plurality of first nodes as active nodes, available for performing data-processing operations, after the generating of the second assignment data.

Clause 14. The method of clause 1, wherein:
the integrated-circuit system comprises one or more bridges or interfaces; and
the integrated-circuit system stores first affinitization data that associates each of the bridges or interfaces with a respective caching node of the plurality of caching nodes,
the method further comprising:
generating further assignment data that assigns, to a first local cache region, a first caching node, assigned to a second local cache region by the first assignment data, wherein the first affinitization data associates the first caching node with a first bridge or interface; and
generating second affinitization data that affinitizes the first bridge or interface with a second caching node, of the plurality of caching nodes, different from the first caching node.

Clause 15. The method of clause 1, wherein the method is performed by apparatus that is external to the integrated-circuit apparatus.

Clause 16. The method of clause 1, wherein the method is performed by software executing on a processing system of the integrated-circuit system.

Clause 17. An integrated-circuit system comprising a plurality of nodes of a network, the plurality of nodes comprising one or more processing nodes and a plurality of caching nodes, wherein the integrated-circuit system is configured to:
access first assignment data that assigns each of the plurality of nodes to a respective local cache region of a plurality of local cache regions;
access defect data that identifies one or more of the nodes as being defective; and
for a first node of the plurality of nodes that is identified as being defective by the defect data:
   - identify a first local cache region to which the first node is assigned by the first assignment data;
   - use a distance metric to identify a second node, not identified as being defective by the defect data, that is a closest node, out of a subset of the plurality of nodes, for the first local cache region, under the distance metric; and
   - generate second assignment data in which the second node is assigned to the first local cache region.

Clause 18. The integrated-circuit system of clause 17, wherein:
the integrated-circuit system is a multi-chip system configured to provide hierarchal caching;
a first cache line of the first local cache region is in a same chip as the first local cache region; and
a second cache line of the first local cache region is in a different chip of the multi-chip system.

Clause 19. A non-transitory computer-readable medium storing computer-readable code for fabrication of an integrated-circuit system or portion thereof according to clause 17.

Clause 20. A non-transitory computer-readable medium storing software instructions that, when executed by a processing system, cause the processing system to configure an integrated-circuit system, wherein the integrated-circuit system comprises a plurality of nodes of a network, the plurality of nodes comprising one or more processing nodes and a plurality of caching nodes, wherein the configuring comprises:
accessing first assignment data that assigns each of the plurality of nodes to a respective local cache region of a plurality of local cache regions;
accessing defect data that identifies one or more of the nodes as being defective; and
for a first node of the plurality of nodes that is identified as being defective by the defect data:
   - identifying a first local cache region to which the first node is assigned by the first assignment data;
   - using a distance metric to identify a second node, not identified as being defective by the defect data, that is a closest node, out of a subset of the plurality of nodes, for the first local cache region, under the distance metric; and
   - generating second assignment data in which the second node is assigned to the first local cache region.

It will be appreciated by those skilled in the art that the disclosure has been illustrated by describing one or more specific embodiments thereof, but is not limited to these embodiments; many variations and modifications are possible within the spirit and scope of the disclosure.

## Claims

1. A method of configuring an integrated-circuit system, wherein the integrated-circuit system comprises a plurality of nodes of a network, the plurality of nodes comprising one or more processing nodes and a plurality of caching nodes, the method comprising:
accessing first assignment data that assigns each of the plurality of nodes to a respective local cache region of a plurality of local cache regions;
accessing defect data that identifies one or more of the nodes as being defective; and
for a first node of the plurality of nodes that is identified as being defective by the defect data:
- identifying a first local cache region to which the first node is assigned by the first assignment data;
- using a distance metric to identify a second node, not identified as being defective by the defect data, that is a closest node, out of a subset of the plurality of nodes, for the first local cache region, under the distance metric; and
- generating second assignment data in which the second node is assigned to the first local cache region.

2. The method of claim 1, wherein the first assignment data assigns the second node to a second local cache region different from the first local cache region, and wherein the second assignment data assigns the second node to the first local cache region.

3. The method of claim 1 or 2, wherein identifying the second node comprises using the distance metric to rank the subset of the plurality of nodes, and selecting, as the second node, a highest ranked node of the subset.

4. The method of any preceding claim, wherein the subset of the plurality of nodes comprises all of the nodes that are assigned by the first assignment data to any of a set of one or more of the local cache regions and that are not identified as being defective by the defect data.

5. The method of claim 4, wherein the set of one or more of the local cache regions includes the first local cache region.

6. The method of any preceding claim, wherein:
each node of the plurality of nodes is coupled to a respective router of a plurality of routers;
the plurality of routers are logically coupled as a polygonal mesh of routers; and
each of the plurality of local cache regions comprises a respective set of nodes located within a respective polygonal region of the polygonal mesh, wherein each polygonal region comprises a respective set of vertex routers.

7. The method of claim 6, wherein the distance metric, when applied to a node, for a local cache region, determines a value in dependence upon a logical or physical separation between each respective vertex router of the local cache region and the router to which the node is coupled.

8. The method of any preceding claim, further comprising:
identifying a third node of the plurality of nodes, not identified as being defective by the defect data, that is assigned, by the first assignment data, to a third local cache region different from the first local cache region and different from a second local cache region to which the first assignment data assigns the second node, wherein identifying the third node comprises using the distance metric to identify, as the third node, a closest node, out of a subset of the plurality of nodes, for the second local cache region, under the distance metric; and
generating further assignment data that assigns the third node to the second local cache region.

9. The method of any preceding claim, comprising identifying a plurality of closest nodes for the first local cache region, under the distance metric, and selecting, as the second node, a node of the plurality of closest nodes at least partly in dependence upon a power characteristic of each node.

10. The method of any preceding claim, further comprising, for each of a plurality of first nodes identified as being defective by the defect data:
identifying a respective first local cache region to which the respective first node is assigned by the first assignment data;
using the distance metric to identify a respective second node, not identified as being defective by the defect data, that is a closest node, out of a respective subset of the plurality of nodes, for the respective first local cache region, under the distance metric; and
generating further assignment data in which each respective second node is assigned to the respective first local cache region.

11. The method of any preceding claim, comprising:
accessing requirement data that indicates, for each of the plurality of local cache regions, a respective required number of non-defective processing nodes or of non-defective caching nodes to be in each local cache region; and
determining which nodes, identified as defective by the defect data, to include in the plurality of first nodes at least partly in dependence upon the requirement data, such that the second or further assignment data assigns at least the respective required number of processing or caching nodes that are not identified as being defective by the defect data to each of the plurality of local cache regions.

12. The method of any preceding claim, wherein:
the integrated-circuit system comprises one or more bridges or interfaces; and
the integrated-circuit system stores first affinitization data that associates each of the bridges or interfaces with a respective caching node of the plurality of caching nodes,
the method further comprising:
generating further assignment data that assigns, to a first local cache region, a first caching node, assigned to a second local cache region by the first assignment data, wherein the first affinitization data associates the first caching node with a first bridge or interface; and
generating second affinitization data that affinitizes the first bridge or interface with a second caching node, of the plurality of caching nodes, different from the first caching node.

13. The method of any preceding claim, wherein the method is performed by software executing on a processing system of the integrated-circuit system.

14. An integrated-circuit system comprising a plurality of nodes of a network, the plurality of nodes comprising one or more processing nodes and a plurality of caching nodes, wherein the integrated-circuit system is configured to perform the method of any preceding claim.

15. A non-transitory computer-readable medium storing software instructions that, when executed by a processing system, cause the processing system to perform the method of any one of claims 1 to 13.
